Europäisches Patentamt

European Patent Office

Office européen des brevets

(11) Publication number: **0 254 324 B1**

(12) **EUROPEAN PATENT SPECIFICATION**

(45) Date of publication of patent specification: **13.05.92**  (51) Int. Cl.⁵: **C23C 4/10**, C23C 4/06

(21) Application number: **87110770.2**

(22) Date of filing: **11.03.85**

(60) Publication number of the earlier application in accordance with Art.76 EPC: **0 157 231**

(54) **A thermal spray wire.**

(30) Priority: **05.04.84 US 597139**

(43) Date of publication of application:
**27.01.88 Bulletin 88/04**

(45) Publication of the grant of the patent:
**13.05.92 Bulletin 92/20**

(84) Designated Contracting States:
**DE FR GB IT**

(56) References cited:
**GB-A- 1 591 593**
**US-A- 4 276 353**

(73) Proprietor: **The Perkin-Elmer Corporation**
**64 Danbury Road**
**Norwalk Connecticut 06859-0181(US)**

(72) Inventor: **Rangaswamy, Subramaniam**
**488 Bicycle Path**
**Port Jefferson New York 11776(US)**
Inventor: **Harrington, John H.**
**Box 355**
**Warwick New York 10990(US)**

(74) Representative: **Patentanwälte Grünecker,**
**Kinkeldey, Stockmair & Partner**
**Maximilianstrasse 58**
**W-8000 München 22(DE)**

## Description

This invention relates to a thermal spray wire for producing tenacious and corrosion resistant coatings.

Thermal spraying, also known as flame spraying, involves the heat softening of a heat fusible material such as metal or ceramic, and propelling the softened material in particulate form against a surface which is to be coated. The heated particles strike the surface and bond thereto. A conventional thermal spray gun is used for the purpose of both heating and propelling the particles. In one type of thermal spray gun, the heat fusible material is supplied to the gun in powder form. Such powders are typically comprised of small particles, e.g., between 149 $\mu$m (100 mesh U.S. standard Screen size) and about 5 $\mu$m.

A thermal spray gun normally utilizes a combustion or plasma flame to produce the heat for melting of the powder particles. It is recognized by those of skill in the art, however, that other heating means may be used as well, such as electric arcs, resistance heaters or induction heaters, and these may be used alone or in combination with other forms of heaters. In a powder-type combustion thermal spray gun, the carrier gas, which entrains and transports the powder, can be one of the combustion gases or an inert gas such as nitrogen, or it can be simply compressed air. In a plasma spray gun, the primary plasma gas is generally nitrogen or argon. Hydrogen or helium is usually added to the primary gas. The carrier gas is generally the same as the primary plasma gas, although other gases, such as hydrocarbons, may be used in certain situations.

The material alternatively may be fed into a heating zone in the form of a rod or wire. In the wire type thermal spray gun, the rod or wire of the material to be sprayed is fed into the heating zone formed by a flame of some type, where it is melted or at least heat-softened and atomized, usually by blast gas, and thence propelled in finely divided form onto the surface to be coated. The rod or wire may be conventionally formed as by drawing, or may be formed by sintering together a powder, or by bonding together the powder by means of an organic binder or other suitable binder which disintegrates in the heat of the heating zone, thereby releasing the powder to be sprayed in finely divided form. In other forms the wire may have a coating sheath of one component and a core of the others, or may be made by twisting strands of the components.

Coatings produced by thermal spraying alloys of nickel, iron, cobalt or combinations thereof as a base metal which contain, in the alloy, chromium and optionally aluminum and/or other elements are used to provide corrosion protection of metal components such as in gas turbine engines and boiler systems. Cobalt, for example, is used as either a base metal or an alloying element to improve high temperature creep and strength properties in cast and wrought superalloys. However, it is well known that cobalt is not classified as an oxidation resistant metal. Scaling and oxidation rates of unalloyed cobalt in air are many times those of nickel. The scaling and oxidation resistance of cobalt-base alloys at high temperature is largely a function of chromium content. As a result, cast or wrought parts fabricated of cobalt alloys frequently require special coatings for protection.

However, in the thermal spraying of such nickel, iron or cobalt alloys, the bond strength, bend ductility and thickness limits of the resultant coatings are often not satisfactory, even where the coatings are thermal sprayed using a plasma spray gun. Also, to obtain resistance to the corrosive conditions in the application, an alloying element such as yttrium or a rare earth metal is often added, but thermal spray powders or wires of such alloys are expensive to manufacture. Typical alloys of this type are disclosed, for example, in U.S.-A-4,313,760, and in GB-A-2,028,378.

To achieve high density and improved bonding, alloy powders are plasma sprayed in a low pressure inert atmosphere chamber, an operation that is slow and costly and requires sophisticated vacuum and work handling equipment. There are similar and even more complex problems with vapor deposition which is an alternative coating method known in the field. Chambers also preclude deposition onto large components such as boilers.

Coatings having improved bond strength may be thermal sprayed using a composite powder formed of metals capable of reacting exothermically as described in U.S.-A-3,322,515. One such powder has a nickel core with about 5 percent by weight of fine particles of aluminum bonded to the surface thereof with an organic binder. The core may be alloyed with another metal such as chromium. Cobalt plus aluminum and molybdenum plus aluminum are others of many exothermic pairs mentioned therein.

Several other patents teach improved clad powders to produce thermal sprayed coatings having good bond strength and the capability of being readily machined. One is U.S.-A-3,841,901 which discloses a powder of nickel, copper or iron core coated with fine particles of aluminum and molybdenum for producing a thermal sprayed coating which has good bond strength and can readily be machined. Similarly U.S.-A-4,181,525 teaches a thermal spray powder comprising particles having a core of nickel, iron, copper, cobalt or alloys thereof coated with a binder containing discreet particles of aluminum and substantially pure nickel, directed to coatings having improved machinability.

The composite powders disclosed in the above-mentioned patents are generally employed for bonding other coating materials to substrates such as steel, or for producing single step coatings for machine element applications requiring wear resistance and finishing capability. However, there has been only limited success with composite powders where corrosion resistance is required. The reasons are not well understood. In aqueous or moist environments, electrolytic problems appear to be associated with the heterogeneous nature of the coatings resulting from incomplete alloying of the cladding elements with the core during the thermal spraying process. However, protection is also lacking in dry, high temperature situations that are oxidizing or that involve sulfates and chlorides in either oxidizing or reducing conditions. If coatings contain any free nickel, as results from incomplete reaction or alloying during thermal sprayings the nickel-aluminum clad powder of U.S.-A-4,181,525, even where the powder has a nickel chromium alloy core, the coatings are especially vulnerable to attack in certain corrosive conditions. The attack is not only in the coating material but in the interface, weakening the bond and causing coatings to spall.

Chromium is used as an alloying element in a powder core to improve corrosion resistance of coatings of a thermal spray powder in which the core is clad with aluminum. However, the chromium as a core or as an addition has proven to reduce the bond strength of the thermal sprayed coating. For example, aluminum clad chromium or nickel-chromium alloy provides lower bond strength than aluminum clad nickel.

As taught in U.S.-A-3,322,515, for bonding purposes, iron is not of itself a satisfactory component in a composite with aluminum, and iron chromium alloy clad only with aluminun has especially poor bonding when thermal sprayed.

Thus, although composite thermal spray powders are known and available which may produce satisfactory bond stength, high tenacity is desired for the corrosive environments, and the coatings produced from such powders are particularly lacking in sufficient corrosion resistance. On the other hand, the known alloy powders used for thermal spraying coatings for high temperature corrosion protection lack sufficient bond strength.

U.S.-A-3,655,425 discloses a thermal spray powder having core particles of metal coated with fine discrete particles of a ceramic such as to leave exposed a portion of the surface area of the metal core. The discrete particles may additionally include another ceramic or a metal such as aluminum. In teaching the exposure of core surface, the patent is particularly directed to the problem of carrying into the coating ceramic particles that are difficult or impossible to melt in the thermal spray process. A preferred example of ceramic in the above-mentioned patent is boron nitride to produce abradable coatings. Yttrium oxide is not mentioned therein as an example of a ceramic for cladding the core particles, nor is there any teaching or suggestion that inclusion of any other oxide with aluminum in composite materials may enhance the bond strength and corrosion resistance of the thermal sprayed coatings.

U.S.-A-3,864,093 teaches a coated article, the coated layer having at least 2 percent by volume of metal oxide particles dispensed in a metal alloy matrix. Fourteen metal oxides plus spinel combinations thereof are given for the metal oxide particles, yttrium oxide being one of the 14 oxides listed. The metal alloy matrix may be an alloy of iron, cobalt or nickel with one or more of aluminum, silicon and chromium. The coatings are produced by plasma or detonation spraying of blends of the constituent particles of metal oxide and metal alloy, and are characterized by a high hardness of at least 500 VHN (with 300 gram load) which is equivalent to Rc 49. As taught in the patent, the metal oxide particles increase wear resistance of the coating without degrading the normal oxidation resistance of the alloy matrix. There is no indication that the oxide inclusions may increase the oxidation and hot corrosion resistance or the bonding. In fact, it is generally known in the art that thermal sprayed oxides bond poorly in comparison to metals.

GB-A-1591593 describes a flame spray powder consisting of at least one of the metal elements iron, cobalt or nickel and additionally aluminum which constituents have been subjected to repeated application of compressive forces sufficient to bond the particles of the constituents to one another. To these bonded constituents, yttrium oxide may be added as a hard phase of dispersoid. According to one example, this flame spray powder may have the following ingredients: chromium 10-30 weight percent, aluminum 0-20 weight percent, yttrium oxide 0.1-5.0 weight percent and the balance iron/cobalt or nickel.

A wire taught in U.S.-A-4,276,353 is formed of a sheath of aluminum end a compacted powder core containing a major portion of nickel and stainless steel and a minor portion of aluminum and metal oxide. The examples given for metal oxide are zirconium oxide and cobalt oxide. The object, according to the patent, is to produce a readily grindable coating without loss of its other desired characteristics. The purpose of the coating is to provide a bearing surface for repairing machinery parts. No guidance is provided therein for improved bond strength or improved hot corrosion resistance.

In view of the foregoing, it is the object of the present invention to provide a non-cavitating thermal spray wire characterised by both high bond strength and hot corrosion resistance.

The foregoing object is in accordance with the invention achieved by a non-cavitating wire comprising:

a sheath of aluminum; and

a compacted powder core containing a base constituent comprising at least one metal selected from the group consisting of nickel, iron, cobalt and chromium, the core further comprising aluminum particles and yttrium oxide particles, wherein the aluminum particles are present in an amount of about 1-15% and the yttrium oxide particles are present in an amount from about 0.5% by weight of the core.

According to a preferred embodiment the yttrium oxide particles are present in an amount from 1 to 10% by weight of the core.

Preferably the base constituent is an alloy and further comprises aluminum.

Further, optionally, the core further comprises one or more elements selected from the group consisting of molybdenum and cobalt each in an amount of approximately 1-10 % by weight of the core.

According to the present invention, a thermal spray wire has been developed for thermal spraying onto metallic substrates by conventional thermal spray equipment. The coatings produced thereby are very tenacious, having especially high bond strength and ductility. The coatings additionally have a high degree of high temperature corrosion resistance compared to prior art thermal sprayed coatings.

The thermal spray wire comprises a sheath of aluminum and a compacted powder core containing a base constituent that comprises at least one of the metals, nickel, iron, cobalt and chromium. The core additionally contains aluminum particles and yttrium oxide particles. The base constituent is preferably an alloy of at least one of the metals, nickel, iron, cobalt and chromium. The base constituent may additionally contain aluminum. The chromium, if present, is preferably in an amount of about 1 to 55 percent by weight of the alloy. The aluminum, if present in the base constituent, is in an amount of about 1 to 60 percent by weight of the base constituent. In one desirable embodiment the aluminum is in the base constituent in an amount of about 20 to 55 percent, and the resulting coating formed from the wire of the present invention has the additional advantage of improved ductility over the highly brittle coatings of flame sprayed alloy high in aluminum content. If chromium and aluminum are both present in the base constituent, preferably they should total about 1 to 55 percent by weight of the base constituent. Nickel-chromium alloy, iron-chromium alloy and iron-aluminum alloy have each been found to be particularly advantageous as the base constituent, depending on the environmental exposure to which the resulting coating is subjected.

The additional constituents aluminum, yttrium oxide and, optionally, molybdenum and/or cobalt are each additionally present in the core but are not alloyed with each other or with the base constituent prior to use in the thermal spray process. The additional constituent aluminum should be present in an amount of about 1 to 15 percent and the yttrium oxide from about 0.5 percent and preferably about 1 to 10 percent by weight of the core. The molybdenum and/or cobalt, if either is present as a third or fourth additional constituent, may each be present in an amount of about 1 to 10 percent by weight of the core.

The base constituent may contain not only nickel, iron, cobalt, chromium or combinations of these, and aluminum, as set forth, but may additionally contain some amounts of other metallic elements such as yttrium or rare earth metals, and also may contain zirconium, hafnium, titanium refractory metals or metalloids such as silicon, carbon and boron. For example, the base constituent alloy may be of the types disclosed in the previously referenced U.S.-A-4,313,760 and GB-A-2,028,378. Preferably, however, the base constituent alloy is a common, simple alloy such as nickel with 20 weight percent chromium, nickel with 16 weight percent chromium and 8 weight percent iron, iron with 30 weight percent chromium, or iron with 50 weight percent aluminum.

The additional constituents aluminum, yttrium oxide and, optionally, molybdenum and/or cobalt may each contain small amounts of alloying elements, but preferably each is in substantially pure form; for example, they should contain less than 5 and preferably less than about 2 percent impurities.

The term "composite" as used herein is intended to designate a structurally integral unit and does not include a mere mixture of constituents which may be physically separated without any destruction of the structure. Thus, in the case of powder, the term "composite" does not include a simple mixture of individual granules of the separate base constituent and the additional constituents aluminum, yttrium oxide and, optionally, molybdenum and/or cobalt, but requires that each of the individual composite granules contain the separate constituents.

Preferably the composite is in the form of a powder. More preferably, the base constituent is in the form of a core particle, and the additional constituents are in the form of fine particles such as -10 $\mu$m size, desirably secured to the core particle with a binder, preferably an organic binder. A thermal spray powder should have a size generally in the range of about 149 $\mu$m (U.S. Standard Mesh Size) to +5 $\mu$m, preferably about 44 to 121 $\mu$m (-120 to +325 mesh). In the more preferable form of powder, the starting core size is equal to, or about one or two screen sizes smaller than the desired size of the final powder, for example, -121 $\mu$m or -111 $\mu$m or -88 $\mu$m (-120 or -140 or -170 mesh) size core where the final powder is to be 44 to 121 $\mu$m (-120 +325 mesh). Thus one embodiment contemplated is, for example, a 44 to 121 $\mu$m (-120 +325 mesh) thermal spray powder having a core of nickel, iron or cobalt alloyed with chromium or aluminum, and additional particles of -10 $\mu$m aluminum, yttrium oxide and molybdenum and/or cobalt secured to the core with a binder.

The binder material may be any known or conventional binding material which may be used for forming a coating or binding particles together or to a surface. The binder is preferably organic and may be a varnish containing a resin as the varnish solids, or may contain a resin which does not depend on solvent evaporation in order to form a cured or set film. The binder thus may contain a catalyzed resin as the varnish solids. Examples of binders which may be used include the conventional phenolic, epoxy or alkyd varnishes, varnishes containing drying oils, such as tung oil and linseed oil, rubber and latex binders and the like. The binder may alternatively be of the water-soluble type, as for example, of the polyvinylpyrrolidone or polyvinylalcohol type. In addition to organic binders, inorganic binders may be used, such as sodium, silicate, boric acid, borax, magnesium or other soluble carbonates, nitrates, oxalates or oxychlorides, or colloidal suspensions containing oxides.

The coating of the core material with the binder containing the particles may be effected in any known or desired manner. It is simply necessary to mix the powdered ingredients together while allowing the binder to set and dry, which will result in a fairly free-flowing powder consisting of the core coated with the cladding of the aluminum, yttrium oxide and, optionally, molybdenum and/or cobalt.

In yet another form the core may itself be a composite of fine particles of the metals, nickel, iron, cobalt and/or chromium. For example, the core may be a composite of -10 $\mu$m nickel particles and 20% of -10 $\mu$m chromium particles, with -10 $\mu$m particles aluminum and yttrium oxide secured to the composite core. The core or the composite powder itself may be manufactured in any known or desired manner, for example, it may be produced with a spray drier as in U.S-A-3,617,358. However, the base constituent is preferably a structurally integral component so, for example, the thermal spray composite desirably is not formed merely of fine particles of all ingredients including unalloyed chromium intermixed together with a binder.

The thermal spray wire has a sheath of aluminum and a core containing the other components in compacted powder form. The wires should have conventional sizes and accuracy tolerances for flame spray wires and thus, for example, may vary in size between 6.4 mm and 0,5 mm.

In order for the wires to be satisfactory for spraying, the same must not cavitate at the tip when heated, and should preferably be capable of forming a pointed or slightly tapered tip when being melted and sprayed. Thus, the inner core cannot have a lower melting point than the outer sheath, as otherwise the inner core will initially melt, causing cavitation at the tip. The coating sheath must be aluminum, as otherwise during the spraying operation the wire will initially melt out, causing the cavitation which will interfere with a satisfactory spraying operation. The wire having the melting-point characteristics so as to allow the melting off of the tip without this cavitation is referred to herein as "non-cavitating wire."

Where the wire is in the form of a compacted powder core with a coating sheath of aluminum as in the present invention, the additional constituents are contained in the core and should be in the form of fine particles of aluminum in an amount of about 1 to 15 percent, yttrium oxide in an amount from about 0.5 percent and preferably about 1 to 10 percent, optionally, molybdenum and/or cobalt each in an amount of about 1 to 10 percent by weight of the core.

The spraying is in all respects effected in the conventional manner previously utilized for self-bonding thermal spray material, and in particular nickel-aluminum composites. Due to the self-bonding characteristics, special surface preparation other than good cleaning is not required, though, of course, conventional surface preparation such as grit blasting should be utilized to maximize tenacity of the coating to the substrate surface.

The thermal spray wire in accordance with the invention, as contrasted with prior known thermal spray wires produces coatings that are not only self-bonding but also are highly resistant to high temperature oxidation and to oxidizing and reducing atmospheres containing molten or vaporized contaminants containing sodium, sulfur and chlorine such as are in fuels combusting in a marine environment. Additionally, and very surprisingly, the coatings are highly tenacious, typically having tensile bond strengths substantially greater than those of similar prior art composite coatings. Ductility is very good, as evidenced by lack of spalling in sharp angle bending. Coatings also have good machinability, rendering them useful for one-coat machine-element applications. The coatings produced from powders having nickel chromium alloy cores are especially resistant to oxidizing conditions with or without the sodium, sulfur and chlorine. The iron base powders are excellent in reducing conditions containing contaminants such as sodium sulfide and sodium chloride.

The powders containing molybdenum and/or cobalt have substantially the same and in some instances further improvements in corrosion resistance and tenacity, and additionally have an enhanced resistance to wear and impact. Cobalt as an additional constituent further improves tenacity and ductility of the coatings as evidenced, for example, by a substantial increase in allowable thickness of a coating before lifting from the substrate.

Typical applications are energy conversion devices; automotive and diesel combustion and turbine engines; aircraft and marine turbines; coal, oil, and fossil fueled boilers and power generation systems and components; bond coats for ceramic and metal coatings; and pulp and paper mill applications.

The following example is given by way of illustration and not limitation.

Example

A powder mixture containing 80 percent by weight of nickel, 20 percent chromium alloy having a particle size between about 37 $\mu$m (-400 mesh) and +5 $\mu$m, 5 percent by weight of aluminum of average size about 3.5 to 5.5 $\mu$m, and 2 percent by weight of yttrium oxide of average size less than 5 $\mu$m, is thoroughly blended and pressed together in the form of cylindrical briquettes, using a die pressure of 15$\cdot$10$^5$ Pa. The cylindrical briquettes formed have a diameter of 1.05 cm and a length of 1.8 cm. The briquettes are loaded into a drawn aluminum tube of 4 m length, having a 1.07 cm inner diameter and 0.104 cm wall thickness. The ends of the tube are plugged closed and the tube then swaged to a final diameter of 3.175 mm, the surface being maintained free of dents, gouges, scratches and other marks. The wire is then annealed at a temperature between 190 and 390°C. The wire is then coiled and sprayed, using a conventional wire-type flame spray gun sold by METCO Inc., of Westbury, New York, as the METCO Type 12E wire flame spray gun. Spraying is effected using acetylene at a pressure of 2.7$\cdot$10$^5$ Pa, and air as a blast gas at a pressure of

3.3$\cdot$10$^5$ Pa. The oxygen gas flow is maintained at 1.46 m$^3$/hr and the acetylene gas flow at 1.17 m$^3$/hr. The wire is sprayed with a spray rate of 13 kg/hr at a spraying distance between 10 and 13 cm, with the spray material being deposited on the surface of a ground and machine-finished cold rolled steel. The sprayed coating is built up to a thickness of 0.75 mm. The coating is well bonded and has excellent resistance to hot corrosive conditions.

## Claims

1. A thermal spray wire for producing tenacious and corrosion resistant coatings, wherein said wire is a non-cavitating wire comprising:
   a sheath of aluminum; and
   a compacted powder core containing a base constituent comprising at least one metal selected from the group consisting of nickel, iron, cobalt and chromium, the core further comprising aluminum particles and yttrium oxide particles, wherein the aluminum particles are present in an amount of about 1 to 15% and the yttrium oxide particles are present in an amount from about 0.5% by weight of the core.

2. A thermal spray wire in accordance with claim 1 wherein the yttrium oxide particles are present in an amount from 1 to 10% by weight of the core.

3. The thermal spray wire of claim 1 or 2 wherein the base constituent is an alloy further comprising aluminum.

4. The thermal spray wire of anyone of the claims 1 to 3 wherein the core further comprises one or more elements selected from the group consisting of molybdenum and cobalt each in an amount of about 1 to 10% by weight of the core.

## Revendications

1. Fil pour la pulvérisation thermique pour produire des revêtements résistants à la corrosion et difficiles à enlever, dans lequel ledit fil est un fil n'engendrant pas la cavitation comprenant :
   une gaine d'aluminium ; et
   un coeur de poudre compactée contenant un constituant de base comprenant au moins un métal choisi dans le groupe comprenant le nickel, le fer, le cobalt et le chrome, le coeur comprenant en plus des particules d'aluminium et des particules d'oxyde d'yttrium, dans lequel les particules d'aluminium sont présentes dans une teneur d'environ 1 à 15% et les particules d'oxyde d'yttrium sont présentes dans une teneur d'environ 0,5% en poids du coeur.

2.  Fil pour la pulvérisation thermique selon la revendication 1 dans lequel les particules d'oxyde d'yttrium sont présentes dans une teneur de 1 à 10% en poids du coeur.

3.  Fil pour la pulvérisation thermique de la revendication 1 ou 2 dans lequel le constituant de base est un alliage comprenant en plus de l'aluminium.

4.  Fil pour la pulvérisation thermique selon l'une quelconque des revendications 1 à 3 dans lequel le coeur comprend de plus un ou plusieurs éléments choisis dans le groupe comprenant le molybdène et le cobalt chacun dans une teneur d'environ 1 à 10% en poids du coeur.

**Patentansprüche**

1.  Ein Thermalzerstäubungsdraht zum Herstellen von zerreißfesten und korrosionsbeständigen Überzügen, wobei der Draht ein nicht-hohlraumbildender Draht ist und umfaßt:
    einen Mantel aus Aluminium; und
    einen verdichteten Pulverkern welcher einen Basisbestandteil enthält, der wenigstens ein Metall umfaßt, das aus der aus Nickel, Eisen, Kobalt und Chrom bestehenden Gruppe ausgewählt ist, und der Kern ferner Aluminiumpartikel und Yttriumoxidpartikel umfaßt, wobei die Aluminiumpartikel in einer Menge von etwa 1 bis 15 Gew.-% und die Yttriumoxidpartikel in einer Menge von etwa 0,5 Gew.-% des Kerns an vorliegen.

2.  Ein Thermalzerstäubungsdraht nach Anspruch 1, wobei die Yttriumoxidpartikel in einer Menge von 1 bis 10 Gew.-% des Kerns vorliegen.

3.  Ein Thermalzerstäubungsdraht nach Anspruch 1 oder 2, wobei der Basisbestandteil eine Legierung ist, welche ferner Aluminium umfaßt.

4.  Der Thermalzerstäubungsdraht nach wenigstens einem der Ansprüche 1 bis 3, wobei der Kern ferner ein oder mehrere Elemente, die aus der aus Molybdän und Kobalt bestehenden Gruppe ausgewählt sind, jeweils in einer Menge von etwa 1 bis 10 Gew.-% des Kerns umfaßt.